# EUROPEAN PATENT APPLICATION

(11) **EP 4 745 440 A1**
(43) Date of publication of application: **20.05.2026**
(21) Application number: 23947143.6
(22) Date of filing: 03.08.2023
(51) Int. Cl.: F16K 11/087

(54) **THREE-WAY BALL VALVE, ELECTRIC VEHICLE, OPENING CONTROL METHOD, ELECTRONIC DEVICE AND STORAGE MEDIUM**

(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: HU, Lei, Ningbo, Zhejiang 315899 (CN); ZHENG, Xingliang, Ningbo, Zhejiang 315899 (CN); XIA, Songyong, Ningbo, Zhejiang 315899 (CN); XU, Junbo, Ningbo, Zhejiang 315899 (CN); WANG, Jian, Ningbo, Zhejiang 315899 (CN); XING, Xiaodong, Ningbo, Zhejiang 315899 (CN)
(74) Representative: Michalski Hüttermann & Partner Patentanwälte mbB
(86) International application number: PCT/CN2023/110926
(87) International publication number: WO 2025/025197

(57) **Abstract**

Disclosed is a three-way ball valve (100), including a valve body (10) and a spherical valve core (20). The valve body (10) is provided with a medium inlet (11), a first medium outlet (12), and a second medium outlet (13). The spherical valve core (20) is rotatably disposed in the valve body (10), and has a first state and a second state. In the first state, the medium inlet (11) corresponds to a first flow channel (211) and a second flow channel (212), the first flow channel (211) is configured to communicate with the first medium outlet (12), and the second flow channel (212) is configured to communicate with the second medium outlet (13). In the second state, the medium inlet (11) corresponds to a third flow channel (213) and a fourth flow channel (214), the third flow channel (213) is configured to communicate with the first medium outlet (12), and the fourth flow channel (214) is configured to communicate with the second medium outlet (13). The spherical valve core (20) is controlled to rotate relative to the valve body (10), so that an opening degree is adjustable in the first and second states of the spherical valve core (20). This solution can balance a flow difference. Further disclosed are an electric vehicle using the ball valve, an opening degree control method, an electronic device, and a storage medium.

## Description

### TECHNICAL FIELD

The present disclosure relates to the field of valve technologies, and in particular, to a three-way ball valve, an electric vehicle, an opening degree control method, an electronic device, and a storage medium.

### BACKGROUND

As an example, an air conditioner in an electric vehicle uses a water-cooling circulation to heat a battery and to heat an occupant compartment, which causes a problem of heating distribution on two sides. For example, during heating of the occupant compartment, if the battery needs to be heated, an air outlet temperature for the occupant compartment will fluctuate greatly. However, the existing ball valve structure cannot balance a significant difference in flow requirements on two sides.

### SUMMARY

In view of this, the present disclosure provides a three-way ball valve, an opening degree control method, an electronic device, and a storage medium, which can balance a significant difference in flow requirements on two sides.

According to a first aspect of embodiments of the present disclosure, there is provided a three-way ball valve, including: a valve body, provided with a medium inlet, a first medium outlet, and a second medium outlet, the medium inlet being configured to introduce a circulating medium, the first medium outlet being configured to be connected to a first heating unit, and the second medium outlet being configured to be connected to a second heating unit; and
a spherical valve core, rotatably disposed in the valve body, and provided with a plurality of flow channels, where the plurality of flow channels include a first flow channel, a second flow channel, a third flow channel, and a fourth flow channel, a cross-sectional area of the first flow channel being less than a cross-sectional area of the second flow channel, and a cross-sectional area of the third flow channel being greater than a cross-sectional area of the fourth flow channel, and the plurality of flow channels are distributed around a rotation axis of the spherical valve core, the spherical valve core has a first state and a second state, where in the first state, the medium inlet corresponds to the first flow channel and the second flow channel, the first flow channel is configured to communicate with the first medium outlet, and the second flow channel is configured to communicate with the second medium outlet; and in the second state, the medium inlet corresponds to the third flow channel and the fourth flow channel, the third flow channel is configured to communicate with the first medium outlet, and the fourth flow channel is configured to communicate with the second medium outlet, the spherical valve core has an initial position, the initial position being a position where the spherical valve core is in the first state and an opening degree of the three-way ball valve is 50%, and the spherical valve core is controlled to rotate relative to the valve body, so that the opening degree of the three-way ball valve is adjustable when the spherical valve core is in the first state and the second state.

Optionally, the first flow channel and the second flow channel are configured such that a ratio of the cross-sectional area of the first flow channel to the cross-sectional area of the second flow channel is equal to a ratio of a maximum heat load of the first heating unit to a maximum heat load of the second heating unit under a first operating condition, and is also equal to a ratio of a communication area between the medium inlet and the first flow channel to a communication area between the medium inlet and the second flow channel when the spherical valve core is in the first state and the opening degree of the three-way ball valve is 50%, where the maximum heat load of the first heating unit is less than the maximum heat load of the second heating unit under the first operating condition; and/or
the third flow channel and the fourth flow channel are configured such that a ratio of the cross-sectional area of the third flow channel to the cross-sectional area of the fourth flow channel is equal to a ratio of a maximum heat load of the first heating unit to a maximum heat load of the second heating unit under a second operating condition, where the maximum heat load of the first heating unit is greater than the maximum heat load of the second heating unit under the second operating condition.

Optionally, the spherical valve core further includes a first stop portion and a second stop portion that are not provided with a flow channel, the first flow channel is disposed adjacent to the second flow channel, the third flow channel is disposed adjacent to the fourth flow channel, and the first stop portion and the second stop portion are respectively located on two sides of the first flow channel and the second flow channel, and are configured to separate the first flow channel from the fourth flow channel, and to separate the second flow channel from the third flow channel.

Optionally, the cross-sectional area of the first flow channel is equal to the cross-sectional area of the fourth flow channel.

Optionally, an axial dimension of the first flow channel in a direction of the rotation axis is equal to an axial dimension of the fourth flow channel in the direction, and a circumferential dimension of the first flow channel is equal to a circumferential dimension of the fourth flow channel; and/or
the first flow channel and the fourth flow channel are symmetrically disposed in a circumferential direction of the spherical valve core.

Optionally, the cross-sectional area of the second flow channel is equal to the cross-sectional area of the third flow channel.

Optionally, an axial dimension of the second flow channel in a direction of the rotation axis is equal to an axial dimension of the third flow channel in the direction, and a circumferential dimension of the second flow channel is equal to a circumferential dimension of the third flow channel; and/or
the second flow channel and the third flow channel are symmetrically disposed in a circumferential direction of the spherical valve core.

According to a third aspect of the embodiments of the present disclosure, there is provided a method of controlling an opening degree of a three-way ball valve, applied to the three-way ball valve according to any one of the above, the method including:
obtaining a ratio of a current heat load of the first heating unit to a current heat load of the second heating unit, which is defined as a first ratio;
comparing an absolute value of a difference between the first ratio and a second ratio to an absolute value of a difference between the first ratio and a third ratio, the first ratio to the second ratio, and the first ratio to the third ratio, to obtain at least one comparison result, and controlling a state and the opening degree of the three-way ball valve according to the at least one comparison result; where the second ratio is defined as a ratio of the cross-sectional area of the first flow channel to the cross-sectional area of the second flow channel, and the third ratio is defined as a ratio of the cross-sectional area of the third flow channel to the cross-sectional area of the fourth flow channel.

Optionally, the second ratio is equal to a ratio of a maximum heat load of the first heating unit to a maximum heat load of the second heating unit under a first operating condition, and is also equal to a ratio of a communication area between the medium inlet and the first flow channel to a communication area between the medium inlet and the second flow channel when the spherical valve core is in the first state and the opening degree of the three-way ball valve is 50%, and the maximum heat load of the first heating unit is less than the maximum heat load of the second heating unit under the first operating condition;
the third ratio is equal to a ratio of a maximum heat load of the first heating unit to a maximum heat load of the second heating unit under a second operating condition, and the maximum heat load of the first heating unit is greater than the maximum heat load of the second heating unit under the second operating condition.

Optionally, in response to the absolute value of the difference between the first ratio and the second ratio being equal to the absolute value of the difference between the first ratio and the third ratio, the three-way ball valve is controlled to be in the first state, and the opening degree Op satisfies Op = 50%.

Optionally, in response to the absolute value of the difference between the first ratio and the second ratio being less than the absolute value of the difference between the first ratio and the third ratio, and the first ratio being greater than the second ratio, the spherical valve core is controlled to be in the first state, and the opening degree Op satisfies Op=50%+(S1-S)/S*50%, so that a flow of the first flow channel is greater than a flow of the second flow channel;
in response to the absolute value of the difference between the first ratio and the second ratio being less than the absolute value of the difference between the first ratio and the third ratio, and the first ratio being less than the second ratio, the spherical valve core is controlled to be in the first state, and the opening degree Op satisfies Op=50%-(S-S1)/S*50%, so that the flow of the first flow channel is less than the flow of the second flow channel;
in response to the absolute value of the difference between the first ratio and the second ratio being less than the absolute value of the difference between the first ratio and the third ratio, and the first ratio being equal to the second ratio, the spherical valve core is controlled to be in the first state and the opening degree Op satisfies Op=50%, so that the medium inlet of the three-way ball valve is communicated with the first flow channel and also communicated with the second flow channel;
where S1 is the ratio of the current heat load of the first heating unit to the current heat load of the second heating unit, and S is the ratio of the cross-sectional area of the first flow channel to the cross-sectional area of the second flow channel.

Optionally, in response to the absolute value of the difference between the first ratio and the second ratio being greater than the absolute value of the difference between the first ratio and the third ratio, and the first ratio being greater than the third ratio, the spherical valve core is controlled to be in the second state, and the opening degree Op satisfies Op=50%+(S1-S')/S'*50%, so that a flow of the third flow channel is greater than a flow of the fourth flow channel;
in response to the absolute value of the difference between the first ratio and the second ratio being greater than the absolute value of the difference between the first ratio and the third ratio, and the first ratio being less than the third ratio, the spherical valve core is controlled to be in the second state, and the opening degree Op satisfies Op=50%- (S'-S1)/S'*50%, so that the flow of the third flow channel is less than the flow of the fourth flow channel;
in response to the absolute value of the difference between the first ratio and the second ratio being greater than the absolute value of the difference between the first ratio and the third ratio, and the first ratio being equal to the third ratio, the spherical valve core is controlled to be in the second state, and the opening degree Op satisfies Op = 50%, so that the medium inlet of the three-way ball valve is communicated with the third flow channel and also communicated with the fourth flow channel;
where S1 is the ratio of the current heat load of the first heating unit to the current heat load of the second heating unit, and S' is the ratio of the cross-sectional area of the third flow channel to the cross-sectional area of the fourth flow channel.

Optionally, the current heat load of the first heating unit is R1×Q1×|T1-Ts|, and the current heat load of the second heating unit is R2×Q2×|T2-Td|;
where R1 is a specific heat capacity of a medium in the first heating unit, Q1 is a circulating flow rate of the medium in the first heating unit, T1 is a current temperature of the medium in the first heating unit, and Ts is a target temperature of the medium in the first heating unit; R2 is a specific heat capacity of a medium in the second heating unit, Q2 is a circulating flow rate of the medium in the second heating unit, T2 is a current temperature of the medium in the second heating unit, and Td is a target temperature of the medium in the second heating unit.

According to a third aspect of the embodiments of the present disclosure, there is provided an electronic device, including at least one memory and at least one processor, the at least one memory is configured to store computer instructions executable on the at least one processor, and the at least one processor is configured to implement the method according to any one of the above when executing the computer instructions.

According to a fourth aspect of the embodiments of the present disclosure, there is provided a computer-readable storage medium having stored thereon a computer program, which, when executed by at least one processor, implements the method described above.

According to the embodiments of the present disclosure, the present disclosure provides a three-way ball valve, an electric vehicle, an opening degree control method, an electronic device, and a storage medium, in which a spherical valve core is provided with a plurality of flow channels, the spherical valve core can be in a first state and a second state, the spherical valve core can be controlled to be switched to different states, and an opening degree of the three-way ball valve can be adjusted in the first state and the second state, so that a medium inlet can be communicated with the flow channels with different cross-sectional areas, enabling control of flow on two sides, so as to balance a significant difference in flow requirements on two sides.

### BRIEF DESCRIPTION OF DRAWINGS

In order to more clearly illustrate the technical solutions in the embodiments of the present disclosure, the accompanying drawings to be used in the description of the embodiments will be briefly introduced below, and it is apparent that the accompanying drawings in the following description only illustrate some embodiments of the present disclosure, and those of ordinary skill in the art may obtain other drawings according to these drawings without creative efforts.
FIG. 1 is a schematic diagram of a spherical valve core in an initial position according to embodiments of the present disclosure, where an opening degree is 50%.
FIG. 2 is a schematic diagram of a spherical valve core according to embodiments of the present disclosure.
FIG. 3 is a schematic diagram of a spherical valve core in a first state according to embodiments of the present disclosure, where an opening degree is 0.
FIG. 4 is a schematic diagram of a spherical valve core in a first state according to embodiments of the present disclosure, where an opening degree is 100%.
FIG. 5 is a schematic diagram of a spherical valve core in a second state according to embodiments of the present disclosure, where an opening degree is 100%.
FIG. 6 is a schematic diagram of a spherical valve core in a second state according to embodiments of the present disclosure, where an opening degree is 0.
FIG. 7 is a flowchart of a method of controlling an opening degree of a three-way ball valve according to embodiments of the present disclosure.

### DETAILED DESCRIPTION

The technical solutions in the embodiments of the present disclosure will be clearly and completely described below with reference to the accompanying drawings in the embodiments of the present disclosure. It is apparent that the described embodiments are only a part of the embodiments of the present disclosure, not all of the embodiments. All other embodiments obtained by those of ordinary skill in the art based on the embodiments of the present disclosure without creative efforts shall fall within the protection scope of the present disclosure.

The terms used in the embodiments of the present disclosure are only for the purpose of describing specific embodiments, and are not intended to limit the embodiments of the present disclosure. As used in the embodiments of the present disclosure and the appended claims, the singular forms "a", "an" and "the" are intended to include the plural forms as well, unless the context clearly indicates otherwise. It should also be understood that the term "and/or" used herein refers to and includes any or all possible combinations of one or more of the associated listed items.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, first information may also be referred to as second information, and similarly, second information may also be referred to as first information. Depending on the context, the word "if" as used herein may be interpreted as "when ..." or "upon ..." or "in response to determining that".

For purposes of brevity and ease of understanding, terms used herein in characterizing size relationships are "greater than" or "less than," "higher than" or "lower than." However, for those of skill in the art, it can be understood that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

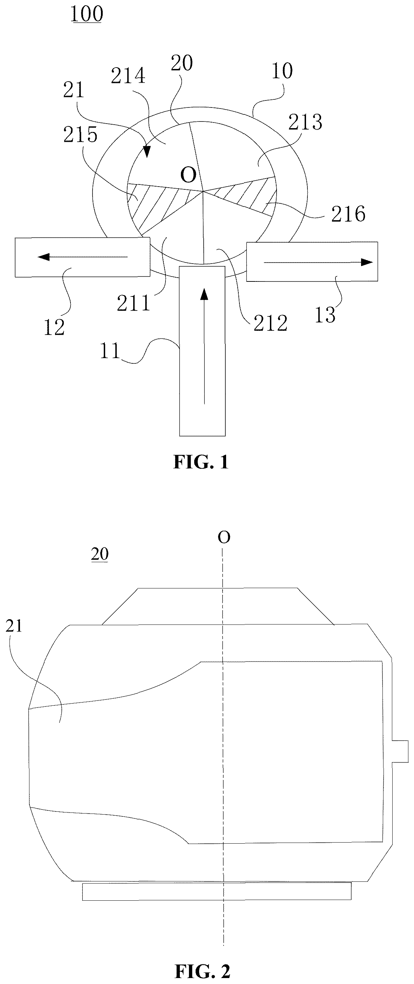

Referring to FIGS. 1 and 2, FIG. 1 is a schematic diagram of a three-way ball valve 100 according to an exemplary embodiment of the present disclosure, where a spherical valve core 20 is in an initial position, and an opening degree is 50%. FIG. 2 is a schematic diagram of a spherical valve core 20.

The present disclosure provides a three-way ball valve 100, including a valve body 10 and a spherical valve core 20 rotatably disposed in the valve body 10, and a rotation axis of the spherical valve core 20 is denoted as O. The spherical valve core 20 may be provided with a transmission rod at the top thereof, and a motor may drive the transmission rod to rotate through a gear mechanism, thereby driving the spherical valve core 20 to rotate. The gear mechanism functions as a reduction mechanism.

The valve body 10 is provided with a medium inlet 11, a first medium outlet 12, and a second medium outlet 13, and the medium inlet 11 is configured to introduce a circulating medium, such as a liquid medium. The first medium outlet 12 is configured to be connected to a first heating unit, the first heating unit is configured to heat a first component, and the first heating unit includes, but is not limited to, a heat exchange component. The second medium outlet 13 is configured to be connected to a second heating unit, the second heating unit is configured to heat a second component, and the second heating unit includes, but is not limited to, an air conditioner. In an embodiment, one of the first component and the second component is a battery, and the other of the first component and the second component is an occupant compartment, but not limited thereto.

The spherical valve core 20 is provided with a plurality of flow channels 21. The plurality of flow channels 21 include a first flow channel 211, a second flow channel 212, a third flow channel 213, and a fourth flow channel 214. A cross-sectional area of the first flow channel 211 is less than a cross-sectional area of the second flow channel 212, and a cross-sectional area of the third flow channel 213 is greater than a cross-sectional area of the fourth flow channel 214. The plurality of flow channels 21 are distributed around a rotation axis O of the spherical valve core 20, and the spherical valve core 20 is in sealed engagement with the valve body 10, so that the plurality of flow channels 21 form sealed flow channels and are separated from each other. For example, the spherical valve core 20 and the valve body 10 may be sealed by a sealing ring. The cross-sectional area herein refers to an area of the first flow channel 211 in a cross-section obtained by cutting the first flow channel 211 with a vertical plane where the rotation axis O is located as shown in FIG. 2. The cross-sectional area of the second flow channel 212, the third flow channel 213, or the fourth flow channel 214 has the same meaning as above, and will not be repeated herein.

The spherical valve core 20 has a first state and a second state. In the first state, the medium inlet 11 corresponds to the first flow channel 211 and the second flow channel 212, the first flow channel 211 is configured to communicate with the first medium outlet 12, and the second flow channel 212 is configured to communicate with the second medium outlet 13. In the second state, the medium inlet 11 corresponds to the third flow channel 213 and the fourth flow channel 214, the third flow channel 213 is configured to communicate with the first medium outlet 12, and the fourth flow channel 214 is configured to communicate with the second medium outlet 13. The spherical valve core 20 has an initial position, and the initial position is a position where the spherical valve core 20 is in the first state and the opening degree of the three-way ball valve is 50%. The spherical valve core 20 is controlled to rotate relative to the valve body 10, so that the opening degree of the three-way ball valve 100 is adjustable when the spherical valve core 20 is in the first state and the second state. It should be noted that when the spherical valve core 20 is in the first state and the opening degree of the three-way ball valve is 50%, the medium inlet 11 is in sealed communication with the first flow channel 211, and is also in sealed communication with the second flow channel 212.

As above, the spherical valve core 20 is provided with the plurality of flow channels 21, and the spherical valve core 20 may be in the first state and the second state. The spherical valve core 20 may be controlled to be switched to different states, and the opening degree of the three-way ball valve 100 may be adjusted in the first state and the second state. In this way, the medium inlet 11 may be communicated with the flow channels 21 with different cross-sectional areas, enabling control of flow on two sides, so as to balance a significant difference in flow requirements on two sides.

In an embodiment, the first flow channel 211 and the second flow channel 212 are configured such that a ratio of the cross-sectional area of the first flow channel 211 to the cross-sectional area of the second flow channel 212 is equal to a ratio of a maximum heat load of the first heating unit to a maximum heat load of the second heating unit under a first operating condition, and is also equal to a ratio of a communication area between the medium inlet 11 and the first flow channel 211 to a communication area between the medium inlet 11 and the second flow channel 212 when the spherical valve core 20 is in the first state and the opening degree of the three-way ball valve is 50%. The maximum heat load of the first heating unit is less than the maximum heat load of the second heating unit under the first operating condition. In this way, the initial position of the spherical valve core 20 may be determined according to the ratio of the maximum heat load of the first heating unit to the maximum heat load of the second heating unit under the first operating condition, and when a ratio of a current heat load of the first heating unit to a current heat load of the second heating unit changes, the state of the spherical valve core 20 and the opening degree of the three-way ball valve 100 may be controlled, so that the flow is controlled through the three-way ball valve 100 to meet flow distribution requirements on two sides. The first operating condition may be, for example, a cooling condition. Under the first operating condition, the spherical valve core 20 is in the first state, and at this time, the medium inlet 11 corresponds to an area where the first flow channel 211 and the second flow channel 212 are located.

In an embodiment, the third flow channel 213 and the fourth flow channel 214 are configured such that a ratio of the cross-sectional area of the third flow channel 213 to the cross-sectional area of the fourth flow channel 214 is equal to a ratio of a maximum heat load of the first heating unit to a maximum heat load of the second heating unit under a second operating condition, where the maximum heat load of the first heating unit is greater than the maximum heat load of the second heating unit under the second operating condition. In this way, the state of the spherical valve core 20 and the opening degree of the three-way ball valve 100 may be controlled according to the ratio of the maximum heat load of the first heating unit to the maximum heat load of the second heating unit under the second operating condition, so that the flow may be controlled through the three-way ball valve 100 to meet the flow distribution requirements on two sides. The second operating condition may be, for example, a heating operating condition. Under the second operating condition, the spherical valve core 20 is in the second state, and at this time, the medium inlet 11 corresponds to an area where the third flow channel 213 and the fourth flow channel 214 are located.

In an embodiment, the spherical valve core 20 further includes a first stop portion 215 and a second stop portion 216 that are not provided with a flow channel. The first stop portion 215 and the second stop portion 216 are distributed around the rotation axis O of the spherical valve core 20. The first flow channel 211 is disposed adjacent to the second flow channel 212, the third flow channel 213 is disposed adjacent to the fourth flow channel 214, and the first stop portion 215 and the second stop portion 216 are respectively located on two sides of the first flow channel 211 and the second flow channel 212, and are configured to separate the first flow channel 211 from the fourth flow channel 214 and to separate the second flow channel 212 from the third flow channel 213. In this way, the first flow channel 211 and the second flow channel 212 form a group, which corresponds to the medium inlet 11 in the first state, and the third flow channel 213 and the fourth flow channel 214 form a group, which corresponds to the medium inlet 11 in the second state, so that the two groups of flow channels are reliably separated from each other, ensuring the reliability of flow distribution in the first state and the second state.

The cross-sectional areas of the first flow channel 211, the second flow channel 212, the third flow channel 213, and the fourth flow channel 214 may be set according to actual requirements. In an embodiment, the cross-sectional areas of the first flow channel 211, the second flow channel 212, the third flow channel 213, and the fourth flow channel 214 may be different from each other. In another embodiment, the cross-sectional area of the first flow channel 211 may be equal to the cross-sectional area of the fourth flow channel 214, but is not limited thereto. In an embodiment, the cross-sectional area of the second flow channel 212 may be equal to the cross-sectional area of the third flow channel 213, but is not limited thereto.

In an embodiment, an axial dimension of the first flow channel 211 in a direction of the rotation axis O is equal to an axial dimension of the fourth flow channel 214 in the direction of the rotation axis O, and a circumferential dimension of the first flow channel 211 is equal to a circumferential dimension of the fourth flow channel 214. In this way, the cross-sectional area of the first flow channel 211 is equal to the cross-sectional area of the fourth flow channel 214.

In an embodiment, the first flow channel 211 and the fourth flow channel 214 are symmetrically disposed in a circumferential direction of the spherical valve core.

In an embodiment, the second flow channel 212 and the third flow channel 213 are symmetrically disposed in the circumferential direction of the spherical valve core 20. In this way, layout of each of the flow channels may be conveniently implemented.

In an embodiment, an axial dimension of the second flow channel 212 in the direction of the rotation axis O is equal to an axial dimension of the third flow channel 213 in the direction of the rotation axis O, and a circumferential dimension of the second flow channel 212 is equal to a circumferential dimension of the third flow channel 213. In this way, the cross-sectional area of the second flow channel 212 is equal to the cross-sectional area of the third flow channel 213.

In the embodiment shown in FIG. 1, the first stop portion 215 and the second stop portion 216 are symmetrically disposed in the circumferential direction of the spherical valve core. The first stop portion 215 is located between the first flow channel 211 and the fourth flow channel 214, and the second stop portion 216 is located between the second flow channel 212 and the third flow channel 213.

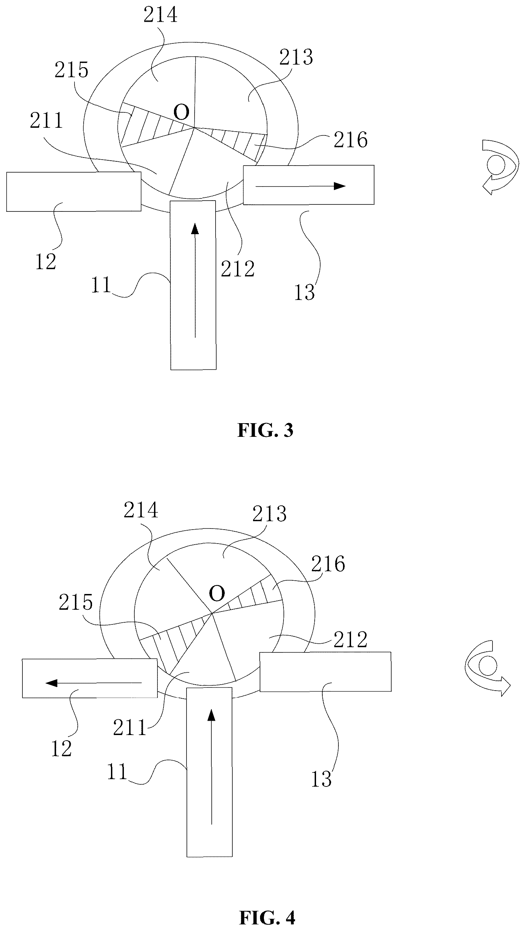

Referring to FIG. 3, FIG. 3 illustrates a schematic diagram of the three-way ball valve 100, where the spherical valve core 20 is in the first state, and the opening degree is 0. That is, the first flow channel 211 is closed, and the second flow channel 212 is fully opened.

Referring to FIG. 4, FIG. 4 illustrates a schematic diagram of the three-way ball valve 100, where the spherical valve core 20 is in the first state, and the opening degree is 100%. That is, the first flow channel 211 is fully opened, and the second flow channel 212 is closed.

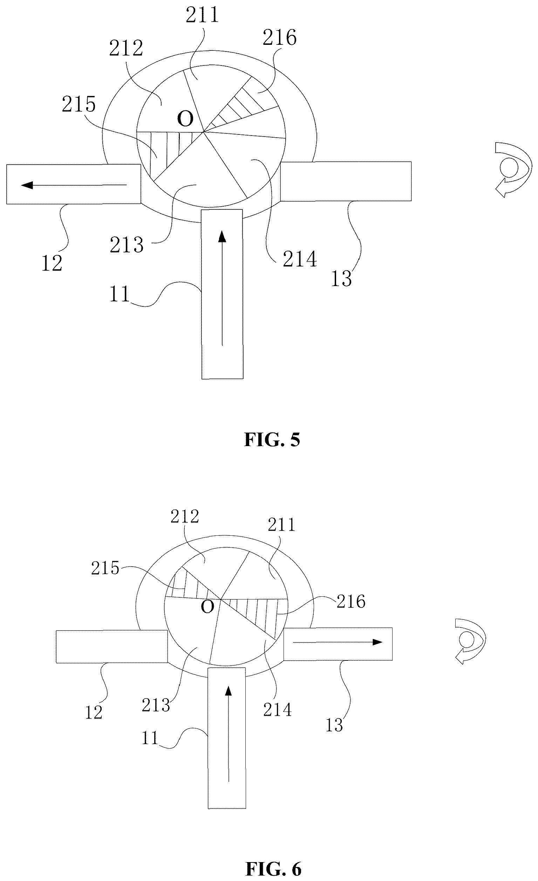

Referring to FIG. 5, FIG. 5 illustrates a schematic diagram of the three-way ball valve 100, where the spherical valve core 20 is in the second state, and the opening degree is 100%. That is, the third flow channel 213 is fully opened, and the fourth flow channel 214 is closed.

Referring to FIG. 6, FIG. 6 illustrates a schematic diagram of the three-way ball valve 100, where the spherical valve core 20 is in the second state, and the opening degree is 0. That is, the third flow channel 213 is closed, and the fourth flow channel 214 is fully opened.

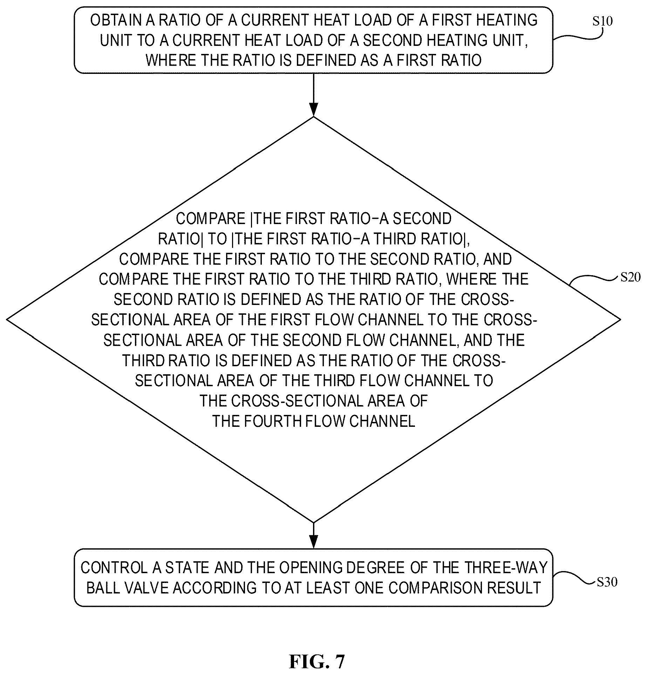

Referring to FIG. 7, FIG. 7 is a flowchart of a method of controlling an opening degree of a three-way ball valve 100 according to an exemplary embodiment of the present disclosure.

The present disclosure further provides a method of controlling the opening degree of the three-way ball valve 100, and the method includes step S10, step S20, and step S30.

In step S10, a ratio of a current heat load of a first heating unit to a current heat load of a second heating unit is obtained, where the ratio is defined as a first ratio.

The ratio of the current heat load of the first heating unit to the current heat load of the second heating unit may be greater than 1 or less than 1. The ratio of the current heat load of the first heating unit to the current heat load of the second heating unit is different under different operating conditions.

The current heat load of the first heating unit is R1×Q1×|T1-Ts|, and the current heat load of the second heating unit is R2×Q2×|T2-Td|. R1 is a specific heat capacity of a medium in the first heating unit, Q1 is a circulating flow rate of the medium in the first heating unit, T1 is a current temperature of the medium in the first heating unit, and Ts is a target temperature of the medium in the first heating unit; R2 is a specific heat capacity of a medium in the second heating unit, Q2 is a circulating flow rate of the medium in the second heating unit, T2 is a current temperature of the medium in the second heating unit, and Td is a target temperature of the medium in the second heating unit. R1 and R2 have fixed values, for example, R1 may be a specific heat capacity of a coolant, and R2 may be a specific heat capacity of the air. Q1, T1, Q2, and T2 may be acquired by a sensor, and Ts and Td may be preset values.

In step S20, |the first ratio-a second ratio| (i.e., an absolute value of a difference between the first ratio and a second ratio) is compared to |the first ratio-a third ratio| (i.e., an absolute value of a difference between the first ratio and a third ratio), the first ratio is compared to the second ratio, and the first ratio is compared to the third ratio, where the second ratio is defined as the ratio of the cross-sectional area of the first flow channel to the cross-sectional area of the second flow channel, and the third ratio is defined as the ratio of the cross-sectional area of the third flow channel to the cross-sectional area of the fourth flow channel.

In this step, the second ratio is equal to the ratio of the maximum heat load of the first heating unit to the maximum heat load of the second heating unit under the first operating condition, and is also equal to the ratio of the communication area between the medium inlet 11 and the first flow channel 211 to the communication area between the medium inlet 11 and the second flow channel 212 when the spherical valve core 20 is in the first state and the opening degree of the three-way ball valve is 50%, and the maximum heat load of the first heating unit is less than the maximum heat load of the second heating unit under the first operating condition. In this way, design parameters of the first flow channel 211 and the second flow channel 212 may be associated with heat load parameters during operation of a system, to meet flow control requirements.

In this step, the third ratio is equal to the ratio of the maximum heat load of the first heating unit to the maximum heat load of the second heating unit under the second operating condition, and the maximum heat load of the first heating unit is greater than the maximum heat load of the second heating unit under the second operating condition. In this way, design parameters of the third flow channel 213 and the fourth flow channel 214 may be associated with the heat load parameters during the operation of the system, to meet the flow control requirements.

In step S30, a state and the opening degree of the three-way ball valve are controlled according to at least one comparison result.

In this method, the spherical valve core 20 is controlled by the current heat load of the first heating unit and the current heat load of the second heating unit, so that the spherical valve core 20 may be controlled to be switched between the first state and the second state, and may change a position thereof in the first state and the second state to control the opening degree of the three-way ball valve 100. In this way, the medium inlet 11 may be communicated with the flow channels 21 with different cross-sectional areas, enabling control of flow on two sides, so as to balance a significant difference in flow requirements on two sides.

In an embodiment, in response to |the first ratio-the second ratio| being less than |the first ratio-the third ratio|, and the first ratio being greater than the second ratio, the spherical valve core 20 is controlled to be in the first state, and the opening degree Op satisfies Op=50%+(S1-S)/S*50%, so that a flow of the first flow channel 211 is greater than a flow of the second flow channel 212. Optionally, the first flow channel 211 may be fully opened, and the second flow channel 212 may be closed. S1 is the ratio of the current heat load of the first heating unit to the current heat load of the second heating unit, and S is the ratio of the cross-sectional area of the first flow channel to the cross-sectional area of the second flow channel.

In response to |the first ratio-the second ratio| being less than |the first ratio-the third ratio|, and the first ratio being less than the second ratio, the spherical valve core 20 is controlled to be in the first state, and the opening degree Op satisfies Op=50%-(S-S1)/S*50%, so that the flow of the first flow channel 211 is less than the flow of the second flow channel 212. Optionally, the first flow channel 211 may be closed, and the second flow channel 212 may be fully opened.

In response to |the first ratio-the second ratio| being less than |the first ratio-the third ratio|, and the first ratio being equal to the second ratio, the spherical valve core 20 is controlled to be in the first state, and the opening degree Op satisfies Op=50%. At this time, the medium inlet 11 of the three-way ball valve 100 is communicated with the first flow channel 211, and is also communicated with the second flow channel 212.

In this method, according to the magnitudes of |the first ratio-the second ratio| and |the first ratio-the third ratio| and the magnitudes of the first ratio and the second ratio, the spherical valve core 20 may be controlled to be in the first state and the opening degree of the three-way ball valve 100 may be controlled, thereby implementing the flow distribution.

In an embodiment, in response to |the first ratio-the second ratio| being greater than |the first ratio-the third ratio|, and the first ratio being greater than the third ratio, the spherical valve core 20 is controlled to be in the second state, and the opening degree Op satisfies Op=50%+(S1-S')/S'*50%, so that a flow of the third flow channel 213 is greater than a flow of the fourth flow channel 214. Optionally, the third flow channel 213 may be fully opened, and the fourth flow channel 214 may be closed. S1 is the ratio of the current heat load of the first heating unit to the current heat load of the second heating unit, and S' is the ratio of the cross-sectional area of the third flow channel 213 to the cross-sectional area of the fourth flow channel 214.

In response to |the first ratio-the second ratio| being greater than |the first ratio-the third ratio|, and the first ratio being less than the third ratio, the spherical valve core 20 is controlled to be in the second state, and the opening degree Op satisfies Op=50%- (S'-S1)/S'*50%, so that the flow of the third flow channel 213 is less than the flow of the fourth flow channel 214. Optionally, the third flow channel 213 may be closed, and the fourth flow channel 214 may be fully opened.

In response to |the first ratio-the second ratio| being greater than |the first ratio-the third ratio|, and the first ratio being equal to the third ratio, the spherical valve core 20 is controlled to be in the second state, and the opening degree Op satisfies Op = 50%, such that the medium inlet 11 of the three-way ball valve is communicated with the third flow channel 213, and is also communicated with the fourth flow channel 214.

In this method, according to the magnitudes of |the first ratio-the second ratio| and |the first ratio-the third ratio| and the magnitudes of the first ratio and the third ratio, the spherical valve core 20 may be controlled to be in the second state and the opening degree of the three-way ball valve 100 may be controlled, thereby implementing the flow distribution.

In an embodiment, in response to |the first ratio-the second ratio| being equal to |the first ratio-the third ratio|, the spherical valve core 20 is controlled to be in the first state, and the opening degree Op satisfies Op = 50%. At this time, the medium inlet 11 of the three-way ball valve 100 is communicated with the first flow channel 211, and is also communicated with the second flow channel 212. That is, in this case, the spherical valve core 20 is in the initial position with the opening degree of 50%.

The present disclosure further provides an electronic device, the electronic device includes at least one memory and at least one processor, the at least one memory is configured to store computer instructions executable on the at least one processor, and the at least one processor is configured to implement the method according to any one of the above when executing the computer instructions.

The present disclosure further provides a computer-readable storage medium having stored thereon a computer program which, when executed by at least one processor, implements the method according to any one of the above.

The foregoing description is merely an exemplary embodiment of the present disclosure, and is not intended to limit the present disclosure. Any modifications, equivalent substitutions, improvements, etc. made within the spirit and scope of the present disclosure should be included within the scope of protection of the present disclosure.

## Claims

1. A three-way ball valve, comprising:
a valve body, comprising a medium inlet, a first medium outlet, and a second medium outlet, the medium inlet being configured to introduce a circulating medium, the first medium outlet being configured to be connected to a first heating unit, and the second medium outlet being configured to be connected to a second heating unit; and
a spherical valve core, rotatably disposed in the valve body and provided with a plurality of flow channels,
wherein
the plurality of flow channels comprise a first flow channel, a second flow channel, a third flow channel, and a fourth flow channel, a cross-sectional area of the first flow channel is less than a cross-sectional area of the second flow channel, a cross-sectional area of the third flow channel is greater than a cross-sectional area of the fourth flow channel, and the plurality of flow channels are distributed around a rotation axis of the spherical valve core,
the spherical valve core comprises a first state and a second state, wherein in the first state, the medium inlet corresponds to the first flow channel and the second flow channel, the first flow channel is configured to communicate with the first medium outlet, and the second flow channel is configured to communicate with the second medium outlet; and in the second state, the medium inlet corresponds to the third flow channel and the fourth flow channel, the third flow channel is configured to communicate with the first medium outlet, and the fourth flow channel is configured to communicate with the second medium outlet,
the spherical valve core comprises an initial position, in which the spherical valve core is in the first state and an opening degree of the three-way ball valve is 50%, and
the spherical valve core is controlled to rotate relative to the valve body, so that the opening degree of the three-way ball valve is adjustable when the spherical valve core is in the first state and the second state.

2. The three-way ball valve according to claim 1, wherein the first flow channel and the second flow channel are configured such that a ratio of the cross-sectional area of the first flow channel to the cross-sectional area of the second flow channel is equal to a ratio of a maximum heat load of the first heating unit to a maximum heat load of the second heating unit under a first operating condition, and is also equal to a ratio of a communication area between the medium inlet and the first flow channel to a communication area between the medium inlet and the second flow channel when the spherical valve core is in the first state and the opening degree of the three-way ball valve is 50%, wherein the maximum heat load of the first heating unit is less than the maximum heat load of the second heating unit under the first operating condition; and/or
the third flow channel and the fourth flow channel are configured such that a ratio of the cross-sectional area of the third flow channel to the cross-sectional area of the fourth flow channel is equal to a ratio of a maximum heat load of the first heating unit to a maximum heat load of the second heating unit under a second operating condition, wherein the maximum heat load of the first heating unit is greater than the maximum heat load of the second heating unit under the second operating condition.

3. The three-way ball valve according to claim 1, wherein the spherical valve core further comprises a first stop portion and a second stop portion that are not provided with a flow channel, the first flow channel is disposed adjacent to the second flow channel, the third flow channel is disposed adjacent to the fourth flow channel, and the first stop portion and the second stop portion are respectively located on two sides of the first flow channel and the second flow channel, the first stop portion is configured to separate the first flow channel from the fourth flow channel, and the second stop portion is configured to separate the second flow channel from the third flow channel.

4. The three-way ball valve according to claim 3, wherein the cross-sectional area of the first flow channel is equal to the cross-sectional area of the fourth flow channel.

5. The three-way ball valve according to claim 4, wherein an axial dimension of the first flow channel in a direction of the rotation axis is equal to an axial dimension of the fourth flow channel in the direction, and a circumferential dimension of the first flow channel is equal to a circumferential dimension of the fourth flow channel; and/or
the first flow channel and the fourth flow channel are symmetrically disposed in a circumferential direction of the spherical valve core.

6. The three-way ball valve according to claim 3, wherein the cross-sectional area of the second flow channel is equal to the cross-sectional area of the third flow channel.

7. The three-way ball valve according to claim 6, wherein an axial dimension of the second flow channel in a direction of the rotation axis is equal to an axial dimension of the third flow channel in the direction, and a circumferential dimension of the second flow channel is equal to a circumferential dimension of the third flow channel; and/or
the second flow channel and the third flow channel are symmetrically disposed in a circumferential direction of the spherical valve core.

8. A method of controlling an opening degree of a three-way ball valve, applied to the three-way ball valve according to any one of claims 1 to 7, the method comprising:
obtaining a ratio of a current heat load of the first heating unit to a current heat load of the second heating unit, as a first ratio;
comparing an absolute value of a difference between the first ratio and a second ratio to an absolute value of a difference between the first ratio and a third ratio, the first ratio to the second ratio, and the first ratio to the third ratio, to obtain at least one comparison result; and
controlling a state and the opening degree of the three-way ball valve according to the at least one comparison result,
wherein the second ratio is defined as a ratio of the cross-sectional area of the first flow channel to the cross-sectional area of the second flow channel, and the third ratio is defined as a ratio of the cross-sectional area of the third flow channel to the cross-sectional area of the fourth flow channel.

9. The method according to claim 8, wherein the second ratio is equal to a ratio of a maximum heat load of the first heating unit to a maximum heat load of the second heating unit under a first operating condition, and is also equal to a ratio of a communication area between the medium inlet and the first flow channel to a communication area between the medium inlet and the second flow channel when the spherical valve core is in the first state and the opening degree of the three-way ball valve is 50%, and the maximum heat load of the first heating unit is less than the maximum heat load of the second heating unit under the first operating condition; and
the third ratio is equal to a ratio of a maximum heat load of the first heating unit to a maximum heat load of the second heating unit under a second operating condition, and the maximum heat load of the first heating unit is greater than the maximum heat load of the second heating unit under the second operating condition.

10. The method according to claim 9, wherein
in response to the absolute value of the difference between the first ratio and the second ratio being equal to the absolute value of the difference between the first ratio and the third ratio, the three-way ball valve is controlled to be in the first state, and the opening degree Op satisfies Op = 50%.

11. The method according to claim 9, wherein
in response to the absolute value of the difference between the first ratio and the second ratio being less than the absolute value of the difference between the first ratio and the third ratio, and the first ratio being greater than the second ratio, the spherical valve core is controlled to be in the first state, and the opening degree Op satisfies Op=50%+(S1-S)/S*50%, so that a flow of the first flow channel is greater than a flow of the second flow channel;
in response to the absolute value of the difference between the first ratio and the second ratio being less than the absolute value of the difference between the first ratio and the third ratio, and the first ratio being less than the second ratio, the spherical valve core is controlled to be in the first state, and the opening degree Op satisfies Op=50%-(S-S1)/S*50%, so that the flow of the first flow channel is less than the flow of the second flow channel; and
in response to the absolute value of the difference between the first ratio and the second ratio being less than the absolute value of the difference between the first ratio and the third ratio, and the first ratio being equal to the second ratio, the spherical valve core is controlled to be in the first state, and the opening degree Op satisfies Op=50%, so that the medium inlet of the three-way ball valve is communicated with the first flow channel, and is also communicated with the second flow channel,
wherein S1 is the ratio of the current heat load of the first heating unit to the current heat load of the second heating unit, and S is the ratio of the cross-sectional area of the first flow channel to the cross-sectional area of the second flow channel.

12. The method according to claim 9, wherein
in response to the absolute value of the difference between the first ratio and the second ratio being greater than the absolute value of the difference between the first ratio and the third ratio, and the first ratio being greater than the third ratio, the spherical valve core is controlled to be in the second state, and the opening degree Op satisfies Op=50%+(S1-S')/S'*50%, so that a flow of the third flow channel is greater than a flow of the fourth flow channel;
in response to the absolute value of the difference between the first ratio and the second ratio being greater than the absolute value of the difference between the first ratio and the third ratio, and the first ratio being less than the third ratio, the spherical valve core is controlled to be in the second state, and the opening degree Op satisfies Op=50%- (S'-S1)/S'*50%, so that the flow of the third flow channel is less than the flow of the fourth flow channel; and
in response to the absolute value of the difference between the first ratio and the second ratio being greater than the absolute value of the difference between the first ratio and the third ratio, and the first ratio being equal to the third ratio, the spherical valve core is controlled to be in the second state, and the opening degree Op satisfies Op = 50%, so that the medium inlet of the three-way ball valve is communicated with the third flow channel, and is also communicated with the fourth flow channel,
wherein S1 is the ratio of the current heat load of the first heating unit to the current heat load of the second heating unit, and S' is the ratio of the cross-sectional area of the third flow channel to the cross-sectional area of the fourth flow channel.

13. The method according to claim 9, wherein the current heat load of the first heating unit is R1×Q1×|T1-Ts|, and the current heat load of the second heating unit is R2×Q2×|T2-Td|;
wherein R1 is a specific heat capacity of a medium in the first heating unit, Q1 is a circulating flow rate of the medium in the first heating unit, T1 is a current temperature of the medium in the first heating unit, and Ts is a target temperature of the medium in the first heating unit; R2 is a specific heat capacity of a medium in the second heating unit, Q2 is a circulating flow rate of the medium in the second heating unit, T2 is a current temperature of the medium in the second heating unit, and Td is a target temperature of the medium in the second heating unit.

14. An electronic device, comprising at least one memory and at least one processor, the at least one memory being configured to store computer instructions executable on the at least one processor, and the at least one processor being configured to implement the method according to any one of claims 8 to 13 when executing the computer instructions.

15. A computer-readable storage medium, having stored thereon a computer program, which, when executed by at least one processor, implements the method according to any one of claims 8 to 13.
